# EUROPEAN PATENT SPECIFICATION

(11) **EP 3 079 034 B1**
(45) Date of publication and mention of the grant of the patent: **30.09.2020**
(21) Application number: 15162572.0
(22) Date of filing: 07.04.2015
(51) Int. Cl.: G06F 1/20

(54) **DOUBLE-ACTING SYNTHETIC JET MODULE FOR COOLING OF ELECTRONIC DEVICES**
DOPPELTWIRKENDES SYNTHETISCHES STRAHLMODUL ZUR KÜHLUNG VON ELEKTRONISCHEN VORRICHTUNGEN
MODULE À JET SYNTHÉTIQUE À DOUBLE ACTION POUR LE REFROIDISSEMENT DE DISPOSITIFS ÉLECTRONIQUES

(43) Date of publication of application: 12.10.2016
(73) Proprietor: Vestel Elektronik Sanayi ve Ticaret A.S., 45030 Manisa (TR)
(72) Inventor: Nil, Metin, 45030 Manisa (TR); Kirisken, Barbaros, 45030 Manisa (TR); Akgül, Mehmet Bahattin, 45030 Manisa (TR); Sari, Gözde, 45030 Manisa (TR)
(74) Representative: Ascherl, Andreas

(56) References cited:
- US-A1- 2006 185 822
- US-A1- 2006 281 398
- US-A1- 2012 170 216

## Description

### Field of the Invention

This invention is generally related to the thermal management of electronic devices and, more particularly to a piezoelectric driven synthetic jet for the cooling of electronic components.

### Background of the Invention

There is a consistent demand for a more compact and thinner design of the electronic devices such as for example laptops, tablets and mobile phones, taking into account the technological trends and user demands. However, the present invention can be used for all kinds of electronic devices which require an effective cooling. Further, the sizes of the products decrease with the development of integrated circuits, whereas the density and complexity of the circuit in the products constantly increases. As a result of the amount of generated heat per unit the corresponding volume increases. The resulting high operating temperatures due to the heat generation cause significant reduction in the safety and performance as well as the corresponding life span of these products.

In particular, the prismatic microelectronic chips placed on printed circuit boards (PCBs) are usually cooled by two different ways, namely passive cooling and active cooling. Regarding passive cooling, a finned heat sink can be mounted on the chip. In this way, the amount of heat transferred out of the chip is increased by enlarging the surface for heat transfer. Regarding active cooling a fluid or airstream is applied on the chip by a fan. The active cooling and the passive cooling can be combined, in case that the requirement for cooling is correspondingly large.

Furthermore, the use of finned surfaces causes an undesirable increase in size and weight of product. In addition, a magnified fan capacity increases the energy consumption and causes problems related to the strength of the fan. Further, thermal vias and copper layers are used for spreading the heat generation of the chips in the printed circuit board. Some printed circuit boards are manufactured from metal to enhance the heat transfer. As a result, the production of printed circuit boards becomes more difficult and their costs increase. Therefore, new technologies are demanded for cooling electronic devices and in particular for cooling chips on a printed circuit board.

Prior art document EP1718141A2 discloses an airflow generating device which comprises a housing and a pressure changing mechanism. The housing has a first opening and a first chamber which contains gas wherein a vibrating plate is used which is driven by a magnet and a coil. The vibrating plate is able to move up and down to generate an airflow. However, this prior art device has a complex structure and has a significantly high power consumption.

Documents US 2006/185822 A1, US 2006/281398 A1 and US 2012/170216 A1 are further prior art documents disclosing active fluid cooling devices for electronic devices comprising a cavity divided into three chambers by two piezoelectric actuators which, when actuated, cause air to get into a chamber or to exit the chamber via corresponding openings in the chamber.

### Description of the Invention

Therefore, it is the object of the present invention to provide an active fluid cooling device, which has a compact structure and a low energy consumption.

This object is solved by an active fluid cooling device for cooling electronic devices, the active fluid cooling device comprising a housing in which a cavity is incorporated, wherein: the cavity is divided into three chambers by a first piezoelectric actuator and a second piezoelectric actuator, each of which has a planar form; the first piezoelectric actuator together with the housing defines an upper air chamber, the first piezoelectric actuator together with the second piezoelectric actuator and the housing defines a middle air chamber, and the second piezoelectric actuator together with the housing defines a bottom air chamber; the upper air chamber is in fluid communication with an upper opening of the housing, the middle air chamber is in fluid communication with a middle opening of the housing, and the bottom air chamber is in fluid communication with a bottom opening of the housing; the first and second piezoelectric actuators have a disc-shaped form; and the middle air chamber is cylindrical with a circular cross-section parallel to the first and second piezoelectric actuators, whereby deformation of the first and second piezoelectric actuators away from each other gives the middle air chamber a nearly ball-like shape; the volume of the upper air chamber is equal to the volume of the bottom air chamber and to half the volume of the middle air chamber, and in that the cross-sectional area of the upper opening is equal to the cross-sectional area of the bottom opening and to half the cross-sectional area of the middle opening.

The present invention has a significant relevance for cooling electronic devices due to the small size, the reliability and the low energy consumption. Furthermore, due to the invention the design of a printed circuit board can be simplified, since the chip and the printed circuit board can be cooled in an effective way according to the invention which requires only a limited space on the circuit board.

The active fluid cooling device has in particular a compact structure based on the housing and the first and second piezoelectric actuators which are incorporated into the housing to generate a fluid stream for cooling a heat generating element which is positioned adjacent to the openings of the active fluid generating device according to the invention. In particular, the active fluid cooling device according to the invention can be manufactured in a small size similar to the size of a chip so that the device according to the invention can easily be placed on a printed circuit board or within any kind of electronic device.

According to a preferred embodiment of the invention, the piezoelectric actuators each comprise a brass diaphragm and a piezoelectric element and wherein the brass diaphragms are attached to the housing and wherein the piezoelectric elements are attached to the brass diaphragms. This is a cost effective way to realize the piezoelectric actuators according to the invention which are connected to a corresponding control unit which applies the positive and negative electric potential to the active fluid cooling device which can be arranged on a printed circuit board and can therefore easily be incorporated thereto.

It is further advantageous, that the piezoelectric actuators have a disc shaped form wherein a piezo ceramic disc is used as piezoelectric element. In particular, the disc shaped form is positive to change the volume of the air chambers which are directly corresponding to each other.

Regarding another embodiment of the invention, the housing comprises an upper cover, a middle plate and a bottom cover wherein the upper cover comprises the upper opening, wherein the middle plate comprises the middle opening and wherein the bottom cover comprises the lower opening so that the active fluid cooling device can be manufactured in an easy way.

The active fluid cooling device according to the invention is in particular effective, when the positive electrical potential and the negative electric potential are applied in alternating way to the first and second piezoelectric actuators so that the middle air chamber increases and decreases in volume while the upper air chamber as well as the bottom air chamber decreases and increases in a corresponding way and wherein the middle air chamber has the largest increase in volume compared to the upper air chamber and the bottom air chamber. Since the middle air chamber is directly connected to the upper and bottom air chamber, and since the middle air chamber has the largest increase in volume, it is possible to generate a highly effective air stream out of the middle air chamber to generate a continuous airflow out of the device according to the invention.

If the frequency of the applied positive electrical potential and negative electric potential controls the generated fluid stream wherein the frequency is adapted to the resonance of the three chambers, in particular to the resonance of the middle air chamber, then a wide control range can be achieved for the generated fluid stream or air stream or airflow according to the invention.

It is further advantageous, if the frequency of the applied positive electrical potential and negative electric potential is controlled in such a way that the maximum of the generated fluid stream is achieved when the frequency is essentially equal to the resonance of the three chambers, in particular equal to the resonance of the middle air chamber, so that the generated fluid stream according to the invention is highly efficient having a low energy consumption.

### Brief Description of the Drawings

- Figure 1: Cooling of a microelectronic chip using synthetic jet assembly or active cooling device according to the invention
- Figure 2a: A cross-sectional side view of the synthetic jet assembly without application of the electrical potential or active cooling device according to the invention
- Figure 2b: A cross-sectional side view of the synthetic jet assembly by applying negative electric potential or active cooling device according to the invention
- Figure 2c: A cross-sectional side view of the synthetic jet assembly by applying positive electric potential or active cooling device according to the invention
- Figure 3: Cooling of a microelectronic chip having finned heat sink using the synthetic jet assembly or active cooling device according to the invention
- Figure 4: A disassembled view of the dismounting of the synthetic jet assembly or active cooling device according to the invention
- Figure 5: Novel driving method frequency shifting near the resonance according to the active fluid cooling device according to the invention
- Figure 6: Driving method in the prior art regarding the amplitude change

### Detailed Description of the Invention

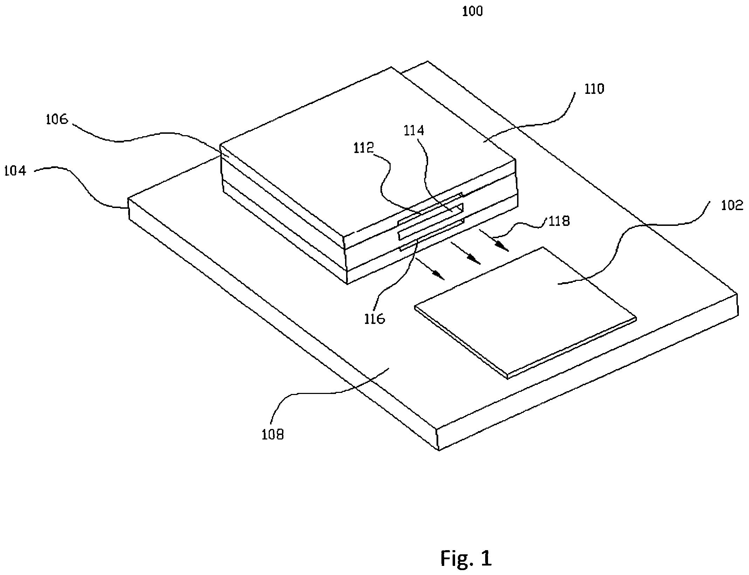

In a first embodiment as shown in figure 1, the thermal design of a microelectronic chip with synthetic jet assembly is given. The design consists of a printed circuit board, a heat-generating chip and a synthetic jet assembly. The chip is placed on the printed circuit board. The synthetic jet assembly consists of three air channels and two diaphragms made from brass. The synthetic jet assembly is placed on a printed circuit board and it provides a parallel air flow over the chip. The thermal management system of the microelectronic chip is given in figure 1. The synthetic jet cooling system 100 consists of a heat-generating chip 102, a printed circuit board 104 and a synthetic jet assembly 106. The chip 102 is soldered on the upper surface 108 of the printed circuit board 104. The frame or housing 110 of the synthetic jet assembly 106 is mounted on the printed circuit board 104 by screws. The synthetic jet assembly 106 consists of three air channels such as an upper air channel 112, a middle air channel 114 and a bottom air channel 116. When the synthetic jet assembly 106 is actuated, an airflow 118 is provided from air channels 112, 114, 116 to the chip and the cooling of the chip 102 is carried out. The fasteners such as screws and solders are not shown in the figures for simple expression.

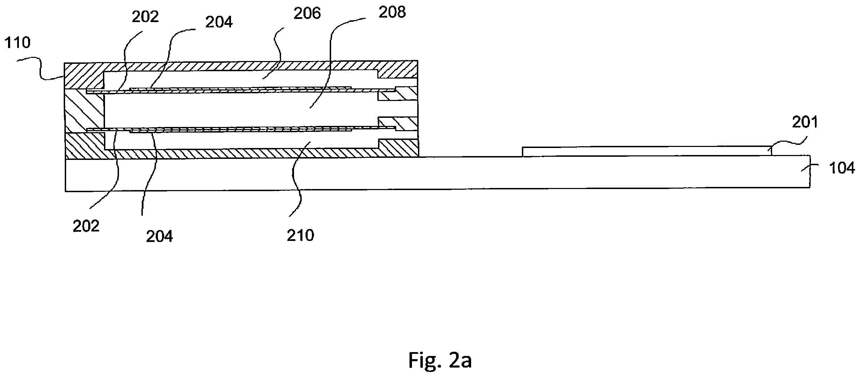

In figure 2a, a cross-sectional side view of the synthetic jet assembly 106 without application of the electrical potential is given. The synthetic jet assembly 106 consists of two brass diaphragms 202, piezo ceramic discs 204 which are fixed on the brass diaphragms and a frame 110. The brass diaphragms 202 are mounted on the synthetic jet assembly 106, as a result, an upper air chamber 206, a middle air chamber 208 and a bottom air chamber 210 are created. The volume of the upper air chamber 206 is equal to the volume of the bottom air chamber 210 and to half of the volume of the middle air chamber 208, and also the cross sectional area of the upper air channel 112 is equal to the cross sectional area of the bottom air channel 116 and to half of the cross sectional area of the middle air channel 114.

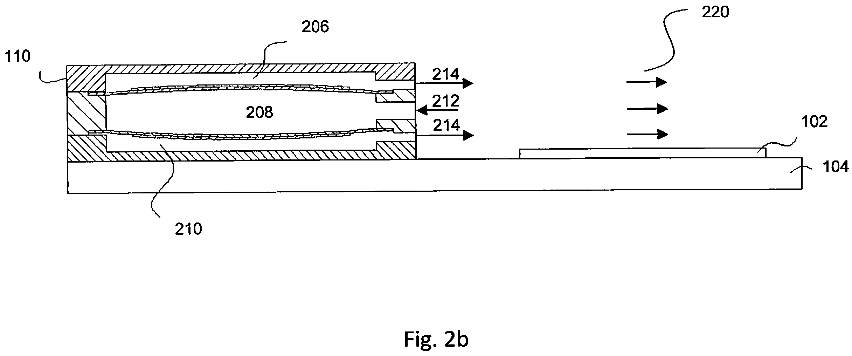

In figure 2b, a cross-sectional side view of the synthetic jet assembly 106 by applying negative electric potential to piezo ceramic discs 204 is given. As a result of the applied electrical voltage, brass diaphragms 202 are deformed towards the outside. The volume of the middle air chamber 208 increases whereas its pressure decreases. The volumes of the bottom air chamber 210 and the volume of the upper air chamber 206 decrease and the pressures of the chambers increase. The air 212 is sucked into the middle air chamber 208 through the middle air channel 114 because of the decrease of the pressure of the middle air chamber 208.

In contrast to the previous case, the air 214 is ejected from the upper 206 and the bottom 210 air chambers through the upper 112 and the bottom 116 air channels because of the increase of the pressure of the air chambers.

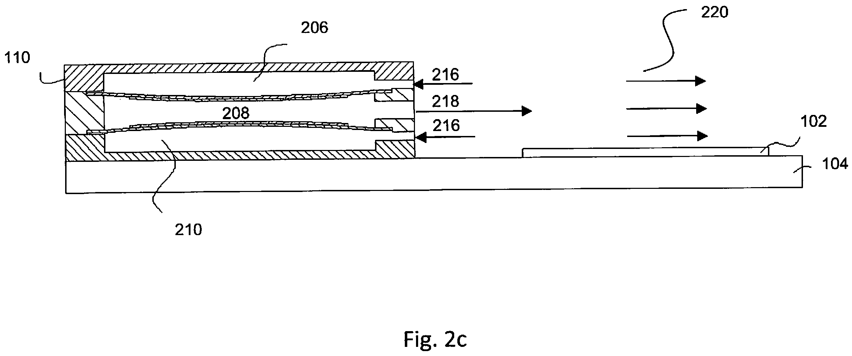

In figure 2c, a cross-sectional side view of the synthetic jet assembly 106 by applying positive electric potential to piezo ceramic discs 204 is given. As a result of the applied electrical voltage, the brass diaphragms 202 are deformed towards the inside. The volume of the middle air chamber 208 decreases whereas its pressure increases. The volume of the bottom air chamber 210 and the volume of the upper air chamber 206 increase and the pressures of the chambers decrease. The air 216 is sucked into the upper 206 and the bottom 210 air chambers through the upper 112 and the bottom 116 air channels because of the decrease of the pressure of these chambers. In contrast to the previous case, the air 218 is ejected out of the middle opening 114 through the middle air chamber 208 because of the increase of the pressure of the air chamber. Since the middle air chamber 208 as shown in figure 2b has the largest volume of all chambers, the generated air stream 218 is very effective as shown by the enlarged length of the arrow in figure 2c. This is in particular possible, since the resonance of the middle air chamber 208 can be used by the frequency of the positive and negative electric potential which is applied to the piezoelectric actuators. Furthermore, the Helmholtz resonance of the middle air chamber 208 can be used which has an only nearly ball-like shape as shown in figure 2b.

The air output can be achieved as a continuous flow from a distance as a characteristic feature of synthetic jets according to the invention. Synthetic jets defined in this invention have more than one chamber, and the air output is combined after a distance and creates a more powerful airflow in comparison to classical synthetic jets.

According to the invention, airflows from the upper air channel 112, the middle air channel 114 and the lower air channel 116 are combined after a defined distance and create a more powerful airflow 220 on the chip 102. As a result the cooling effect is higher in comparison to classical single chamber synthetic jets.

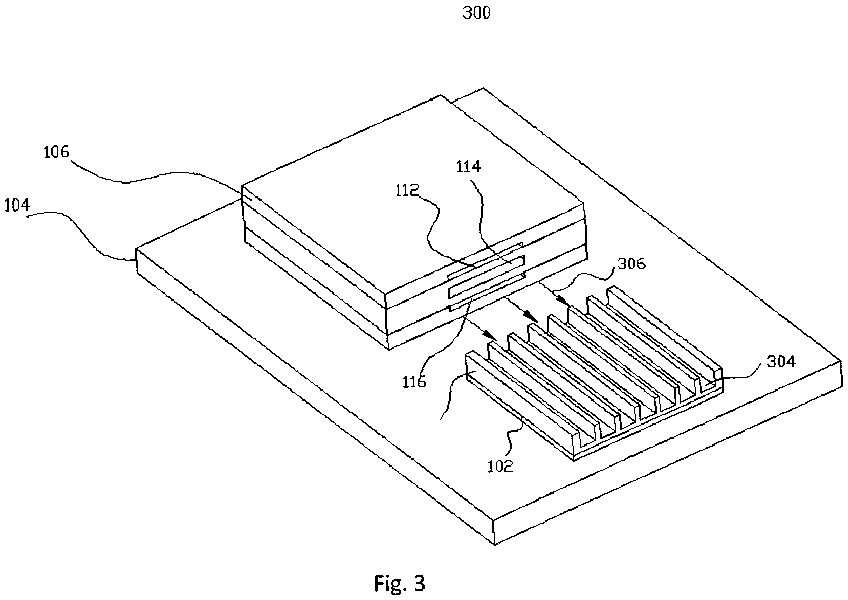

In figure 3, a different embodiment of the invention is given. A second embodiment as shown in figure 3 consists of a printed circuit board, the heat-generating chip, a synthetic jet assembly and a finned heat sink. The chip is placed on the printed circuit board. A finned heat sink is positioned on the chip. The synthetic jet assembly consists of three air channels and two diaphragms made of brass. The synthetic jet assembly is placed on a printed circuit board and provides a parallel airflow over the surfaces of the finned heat sink. A new synthetic jet cooling system 300 consists of one heat-generating chip 102, a printed circuit board 104, a synthetic jet assembly 106 and an aluminum finned heat sink 304. The chip 102 is soldered on the upper surface 108 of the printed circuit board 104. The frame 110 of the synthetic jet assembly 106 is mounted on the printed circuit board 104 by screws. The synthetic jet assembly 106 consists of three air channels such as the upper air channel 112, the middle air channel 114 and the bottom air channel 116. The heat generation of the chip 102 is transferred to the partitions of the finned heat sink 304. When the synthetic jet assembly 106 is actuated, the airflow 306 is provided from air channels 112, 114, 116 towards the surfaces of the fins of the heat sink 302 and the cooling of the chip is carried out.

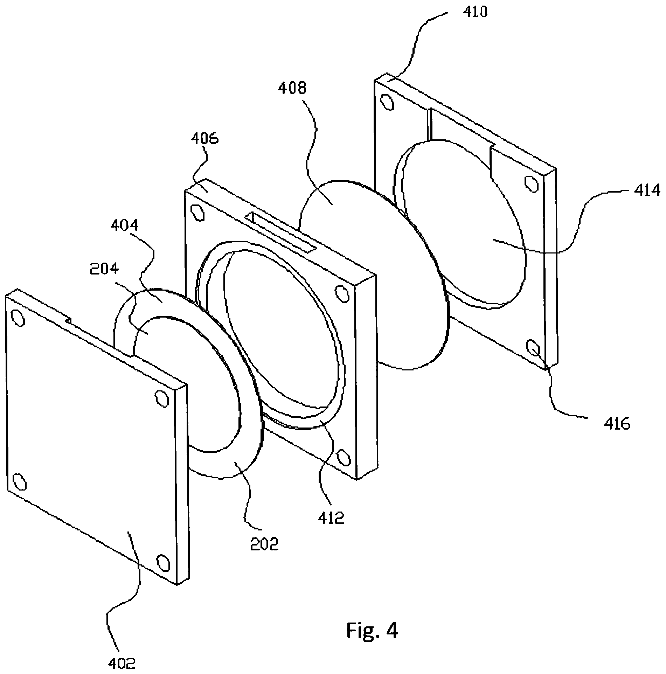

In figure 4, a disassembled view of the synthetic jet assembly is given. The synthetic jet assembly 106 consists of the first piezo actuator 404 which has the upper cover 402, the brass diaphragm 202, the piezo disc 204, the second piezo actuator 408 and the bottom cover 410. The piezo actuators 404-408 are fixed on the housings 412 of the cavity element 406, therefore, the middle air chamber 208 and the middle air channel 114 are created. The bottom chamber 210 and the bottom air channel 116 are created thanks to the housing part 414 which is opened on the bottom cover 410. The upper chamber 206 and the upper air channel 112 are created thanks to the housing element 414 which is opened on the upper cover 402. Finally, the upper cover 402 and the bottom cover 410 can be glued to the middle plate of the cavity element 406. In addition or as alternatives, the upper cover 402, the bottom cover 410 and the middle plate 406 can be screwed together as indicated by the screw holes 416.

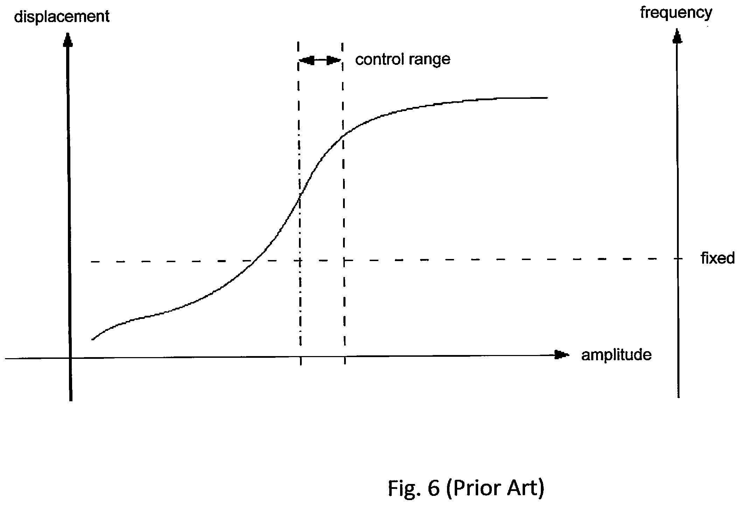

In figure 6, an amplitude change driving method is shown. This method works for double acting synthetic jets as shown in the prior art, which are not slim and which use non-piezo electric materials. This amplitude change method highly limits the design due to displacement.

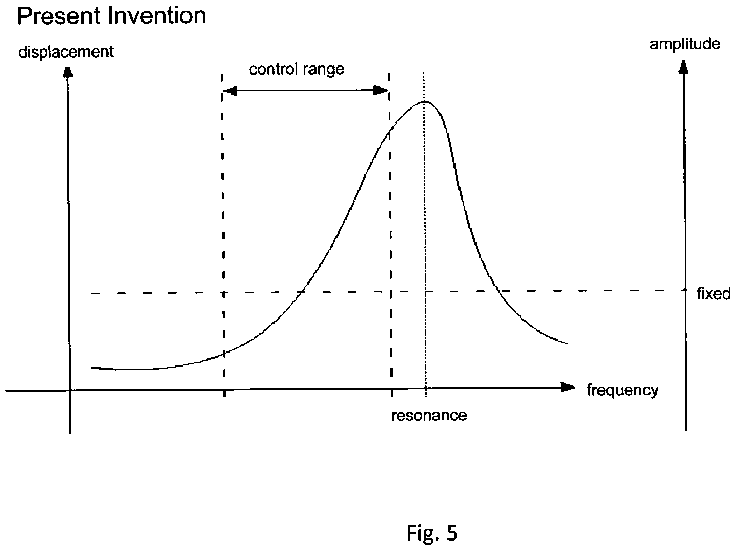

According to figure 5 a method for controlling an active fluid generating device according to the invention is shown wherein the frequency is changed instead of the amplitude and wherein the frequency is close to the resonance frequency to adjust the airflow. The novel synthetic jet design according to the invention has a resonance frequency similar to all vibrating mechanical systems. At resonance frequency the synthetic jet shows the highest possible response and displacement at the same driving amplitude. The response of the synthetic jet does not change abruptly, as the frequency approaches the resonance point the displacement changes with a slope shown in figure 5. On the other hand, because of the nature of piezoelectric materials, keeping frequency constant and increasing or decreasing the amplitude of the driving signal results in a very narrow range for control as shown in figure 6. However, the novel method shown in figure 5 creates a more smooth and wide control range for synthetic jets in contrast to the prior art shown in figure 6. In particular, the control range of the airflow according to the invention is enlarged as shown in figure 5 in comparison to the control range as shown in figure 6 with respect to the prior art. This invention also resolves variable driving problems of double acting synthetic jets by using frequency shifting in particular instead of amplitude change.

A method for active cooling of an electronic device is developed according to the invention. One embodiment of a thermal management of a microelectronic chip is presented. The thermal management system comprises a printed circuit board (PCB), a microelectronic chip which is a heat generation component and a synthetic jet assembly. The synthetic jet assembly includes three jet ports and is positioned in a direction towards the chip. When an alternating voltage is applied to the synthetic jet assembly, the fluid flow is created by the periodic suction and ejection from the jet ports.

The invention describes an active fluid cooling device for cooling of electronic devices, which comprises a housing 110 in which a cavity is incorporated, wherein the cavity of the housing is divided by a first piezoelectric actuator 404 and a second piezoelectric actuator 408 which each have a planar form into three chambers, wherein the first piezoelectric actuator 404 defines together with the housing 110 an upper air chamber 206, wherein the first piezoelectric actuator 404 together with the second piezoelectric actuator 408 and the housing 110 defines a middle air chamber 208, and wherein second piezoelectric actuator 408 together with the housing 110 defines a bottom air chamber 210, wherein the upper air chamber 206 is in cooperation with an upper opening 112 of the housing 110 and wherein the middle air chamber 208 is in cooperation with a middle opening 114 of the housing 110 and wherein the bottom air chamber 210 is in cooperation with a lower opening 116 of the housing 110, wherein a positive electric potential and a negative electric potential are applied in alternating way to the two piezoelectric actuators 404, 408 in such a way that the volumes of the upper air chamber 206, middle air chamber 208 and bottom air chamber 210 within the cavity of the housing are changing to result in a fluid stream 220 in and out of the openings 112, 114, 116 of the housing 110, so that the generated fluid stream 220 is usable for cooling a heat generating element of an electronic device.

## Claims

1. An active fluid cooling device (100, 300) for cooling electronic devices, the active fluid cooling device comprising a housing (110) in which a cavity is incorporated, wherein:
the cavity is divided into three chambers (206, 208, 210) by a first piezoelectric actuator (404) and a second piezoelectric actuator (408), each of which has a planar form;
the first piezoelectric actuator (404) together with the housing (110) defines an upper air chamber (206), the first piezoelectric actuator (404) together with the second piezoelectric actuator (408) and the housing (110) defines a middle air chamber (208), and the second piezoelectric actuator (408) together with the housing (110) defines a bottom air chamber (210);
the upper air chamber (206) is in fluid communication with an upper opening (112) of the housing (110), the middle air chamber (208) is in fluid communication with a middle opening (114) of the housing (110), and the bottom air chamber (210) is in fluid communication with a bottom opening (116) of the housing (110);
the first and second piezoelectric actuators (404, 408) have a disc-shaped form; and
the middle air chamber (208) is cylindrical with a circular cross-section parallel to the first and second piezoelectric actuators (404, 408), whereby deformation of the first and second piezoelectric actuators (404, 408) away from each other gives the middle air chamber (208) a nearly ball-like shape;
**characterized in that:**
the volume of the upper air chamber (206) is equal to the volume of the bottom air chamber (210) and to half the volume of the middle air chamber (208), and **in that** the cross-sectional area of the upper opening (112) is equal to the cross-sectional area of the bottom opening (116) and to half the cross-sectional area of the middle opening (114).

2. An active fluid cooling device according to claim 1, wherein the piezoelectric actuators (404, 408) each comprise a brass diaphragm (202) and a piezoelectric element (204) and wherein the brass diaphragms (202) are each attached to the housing (110) and the piezoelectric elements (204) are each attached to a respective one of the brass diaphragms (202).

3. An active fluid cooling device according to claim 2, wherein the piezoelectric elements (204) each comprise a piezo ceramic disc.

4. An active fluid cooling device according to any one of claims 1 to 3, wherein the housing (110) comprises an upper cover (402), a middle plate (406) and a bottom cover (410), and wherein the upper cover (402) comprises the upper opening (112), the middle plate (406) comprises the middle opening (114), and the bottom cover (410) comprises the bottom opening (116).

5. A printed circuit board (104) mounted with a heat-generating element (102) and an active fluid cooling device (100, 300) according to any one of claims 1 to 4, wherein the active fluid cooling device is arranged to apply a cooling fluid stream (220) to the heat-generating element (102).

6. A printed circuit board according to claim 5, wherein the heat-generating element (102) comprises a finned heat sink (304) and the finned heat sink (304) is aligned parallel with the cooling fluid stream (220).

7. An electronic device comprising a printed circuit board (104) according to claim 5 or claim 6.

8. A method of operating an active fluid cooling device according to any one of claims 1 to 4, comprising:
applying a positive electrical potential and a negative electrical potential in alternation to both piezoelectric actuators (404, 408), whereby the volumes of the upper air chamber (206), the middle air chamber (208) and the bottom air chamber (210) are changed in alternation, resulting in a fluid stream (220) in and out of the openings (112, 114, 116), the fluid stream (220) being usable for cooling a heat-generating element (102) of an electronic device.

9. A method according to claim 8, comprising applying the positive electrical potential and the negative electrical potential in alternation to both piezoelectric actuators (404, 408) to respectively increase and decrease the volume of the middle air chamber (208), whilst respectively decreasing and increasing the volume of the upper air chamber (206) and the bottom air chamber (210), whereby the middle air chamber (208) has the largest change in volume compared to the upper air chamber (206) and the bottom air chamber (210).

10. A method according to claim 8 or claim 9, comprising adjusting the frequency of alternation of the positive electrical potential and the negative electrical potential applied to the piezoelectric actuators (404, 408) to control the fluid stream (220), and adapting the frequency of alteration to the resonant frequency of the three air chambers (206, 208, 210), in particular to the resonant frequency of the middle air chamber (208).

11. A method according to claim 10, comprising adjusting the frequency of alternation of the positive electrical potential and the negative electrical potential such that a maximum flow of the fluid stream (220) is achieved when the frequency of alternation is substantially equal to the resonant frequency of the three air chambers (206, 208, 210), in particular to the resonant frequency of the middle air chamber (208).

## Patentansprüche

1. Aktive Fluidkühlvorrichtung (100, 300) zum Kühlen elektronischer Vorrichtungen, wobei die aktive Fluidkühlvorrichtung ein Gehäuse (110) umfasst, in das ein Hohlraum eingebaut ist, wobei:
der Hohlraum durch einen ersten piezoelektrischen Aktor (404) und einen zweiten piezoelektrischen Aktor (408) in drei Kammern (206, 208, 210) unterteilt ist, von denen jede eine planare Form hat;
der erste piezoelektrische Aktuator (404) zusammen mit dem Gehäuse (110) eine obere Luftkammer (206) definiert, der erste piezoelektrische Aktuator (404) zusammen mit dem zweiten piezoelektrischen Aktuator (408) und dem Gehäuse (110) eine mittlere Luftkammer (208) definiert und der zweite piezoelektrische Aktuator (408) zusammen mit dem Gehäuse (110) eine untere Luftkammer (210) definiert;
die obere Luftkammer (206) in Fluidverbindung mit einer oberen Öffnung (112) des Gehäuses (110) steht, die mittlere Luftkammer (208) in Fluidverbindung mit einer mittleren Öffnung (114) des Gehäuses (110) steht, und die untere Luftkammer (210) in Fluidverbindung mit einer unteren Öffnung (116) des Gehäuses (110) steht;
der erste und zweite piezoelektrische Aktuator (404, 408) eine scheibenförmige Form haben; und
die mittlere Luftkammer (208) zylindrisch mit einem kreisförmigen Querschnitt parallel zu den ersten und zweiten piezoelektrischen Aktoren (404, 408) ist, wobei eine Verformung der ersten und zweiten piezoelektrischen Aktoren (404, 408) voneinander weg der mittleren Luftkammer (208) eine nahezu kugelförmige Form verleiht;
**dadurch gekennzeichnet, dass**:
das Volumen der oberen Luftkammer (206) gleich dem Volumen der unteren Luftkammer (210) und der Hälfte des Volumens der mittleren Luftkammer (208) ist, und daß die Querschnittsfläche der oberen Öffnung (112) gleich der Querschnittsfläche der unteren Öffnung (116) und der Hälfte der Querschnittsfläche der mittleren Öffnung (114) ist.

2. Aktive Fluidkühlvorrichtung nach Anspruch 1, wobei die piezoelektrischen Aktoren (404, 408) jeweils eine Messingmembran (202) und ein piezoelektrisches Element (204) umfassen und wobei die Messingmembranen (202) jeweils an dem Gehäuse (110) und die piezoelektrischen Elemente (204) jeweils an einer der Messingmembranen (202) befestigt sind.

3. Aktive Fluidkühlvorrichtung nach Anspruch 2, wobei die piezoelektrischen Elemente (204) jeweils eine piezokeramische Scheibe umfassen.

4. Aktive Fluidkühlvorrichtung nach einem der Ansprüche 1 bis 3, wobei das Gehäuse (110) eine obere Abdeckung (402), eine Mittelplatte (406) und eine untere Abdeckung (410) aufweist, und wobei die obere Abdeckung (402) die obere Öffnung (112), die Mittelplatte (406) die mittlere Öffnung (114) und die untere Abdeckung (410) die untere Öffnung (116) aufweist.

5. Eine gedruckte Leiterplatte (104), die mit einem wärmeerzeugenden Element (102) und einer aktiven Fluidkühlvorrichtung (100, 300) nach einem der Ansprüche 1 bis 4 montiert ist, wobei die aktive Fluidkühlvorrichtung so angeordnet ist, dass sie einen Kühlfluidstrom (220) auf das wärmeerzeugende Element (102) aufbringt.

6. Leiterplatte nach Anspruch 5, wobei das wärmeerzeugende Element (102) eine gerippte Wärmesenke (304) umfasst und die gerippte Wärmesenke (304) parallel zu dem Kühlfluidstrom (220) ausgerichtet ist.

7. Elektronische Vorrichtung mit einer gedruckten Leiterplatte (104) nach Anspruch 5 oder Anspruch 6.

8. Verfahren zum Betreiben einer aktiven Fluidkühlvorrichtung nach einem der Ansprüche 1 bis 4, umfassend:
Anlegen eines positiven elektrischen Potentials und eines negativen elektrischen Potentials abwechselnd an beide piezoelektrischen Aktoren (404, 408), wodurch die Volumina der oberen Luftkammer (206), der mittleren Luftkammer (208) und der unteren Luftkammer (210) abwechselnd verändert werden, was zu einem Fluidstrom (220) in die Öffnungen (112, 114, 116) hinein und aus diesen heraus führt, wobei der Fluidstrom (220) zum Kühlen eines wärmeerzeugenden Elements (102) einer elektronischen Vorrichtung verwendbar ist.

9. Verfahren nach Anspruch 8, umfassend das Anlegen des positiven elektrischen Potentials und des negativen elektrischen Potentials abwechselnd an beide piezoelektrischen Aktoren (404, 408), um das Volumen der mittleren Luftkammer (208) zu vergrößern bzw. zu verkleinern, während das Volumen der oberen Luftkammer (206) und der unteren Luftkammer (210) verkleinert bzw. vergrößert wird, wobei die mittlere Luftkammer (208) die größte Volumenänderung im Vergleich zur oberen Luftkammer (206) und der unteren Luftkammer (210) aufweist.

10. Verfahren nach Anspruch 8 oder 9, umfassend das Einstellen der Frequenz des Wechsels des positiven elektrischen Potentials und des negativen elektrischen Potentials, die an die piezoelektrischen Aktuatoren (404, 408) angelegt werden, um den Fluidstrom (220) zu steuern, und das Anpassen der Änderungsfrequenz an die Resonanzfrequenz der drei Luftkammern (206, 208, 210), insbesondere an die Resonanzfrequenz der mittleren Luftkammer (208).

11. Verfahren nach Anspruch 10, umfassend das Einstellen der Frequenz des Wechsels des positiven elektrischen Potentials und des negativen elektrischen Potentials, so dass ein maximaler Fluss des Fluidstroms (220) erreicht wird, wenn die Frequenz des Wechsels im Wesentlichen gleich der Resonanzfrequenz der drei Luftkammern (206, 208, 210) ist, insbesondere der Resonanzfrequenz der mittleren Luftkammer (208).

## Revendications

1. Un dispositif de refroidissement à fluide actif (100, 300) pour refroidir des dispositifs électroniques, le dispositif de refroidissement à fluide actif comprenant un boîtier (110) dans lequel est incorporée une cavité, dans lequel :
la cavité est divisée en trois chambres (206, 208, 210) par un premier actionneur piézoélectrique (404) et un second actionneur piézoélectrique (408), chacun d'entre eux ayant une forme plane ;
le premier actionneur piézoélectrique (404) définit avec le boîtier (110) une chambre à air supérieure (206), le premier actionneur piézoélectrique (404) définit avec le deuxième actionneur piézoélectrique (408) et le boîtier (110) une chambre à air intermédiaire (208), et le deuxième actionneur piézoélectrique (408) définit avec le boîtier (110) une chambre à air inférieure (210) ;
la chambre à air supérieure (206) est en communication fluidique avec une ouverture supérieure (112) du boîtier (110), la chambre à air intermédiaire (208) est en communication fluidique avec une ouverture intermédiaire (114) du boîtier (110), et la chambre à air inférieure (210) est en communication fluidique avec une ouverture inférieure (116) du boîtier (110) ;
les premier et deuxième actionneurs piézoélectriques (404, 408) ont une forme de disque ; et
la chambre d'air centrale (208) est cylindrique avec une section circulaire parallèle aux premier et deuxième actionneurs piézoélectriques (404, 408), la déformation des premier et deuxième actionneurs piézoélectriques (404, 408) à l'écart l'un de l'autre donnant à la chambre d'air centrale (208) une forme presque sphérique ;
**caractérisé en ce que** :
le volume de la chambre à air supérieure (206) est égal au volume de la chambre à air inférieure (210) et à la moitié du volume de la chambre à air centrale (208), et **en ce que** la surface de la section transversale de l'ouverture supérieure (112) est égale à la surface de la section transversale de l'ouverture inférieure (116) et à la moitié de la surface de la section transversale de l'ouverture centrale (114).

2. Dispositif de refroidissement actif à fluide selon la revendication 1, dans lequel les actionneurs piézoélectriques (404, 408) comprennent chacun une membrane en laiton (202) et un élément piézoélectrique (204) et dans lequel les membranes en laiton (202) sont chacune fixées au boîtier (110) et les éléments piézoélectriques (204) sont chacun fixés à une membrane respective des membranes en laiton (202).

3. Dispositif de refroidissement actif à fluide selon la revendication 2, dans lequel les éléments piézoélectriques (204) comprennent chacun un disque piézo céramique.

4. Dispositif de refroidissement actif à fluide selon l'une quelconque des revendications 1 à 3, dans lequel le boîtier (110) comprend un couvercle supérieur (402), une plaque centrale (406) et un couvercle inférieur (410), et dans lequel le couvercle supérieur (402) comprend l'ouverture supérieure (112), la plaque centrale (406) comprend l'ouverture centrale (114), et le couvercle inférieur (410) comprend l'ouverture inférieure (116).

5. Carte de circuit imprimé (104) montée avec un élément générateur de chaleur (102) et un dispositif de refroidissement à fluide actif (100, 300) selon l'une quelconque des revendications 1 à 4, dans laquelle le dispositif de refroidissement à fluide actif est agencé pour appliquer un courant de fluide de refroidissement (220) à l'élément générateur de chaleur (102).

6. Carte de circuit imprimé selon la revendication 5, dans laquelle l'élément générateur de chaleur (102) comprend un dissipateur thermique à ailettes (304) et le dissipateur thermique à ailettes (304) est aligné parallèlement au flux de fluide de refroidissement (220).

7. Dispositif électronique comprenant une carte de circuit imprimé (104) selon la revendication 5 ou la revendication 6.

8. Procédé de fonctionnement d'un dispositif de refroidissement à fluide actif selon l'une quelconque des revendications 1 à 4, comprenant :
l'application d'un potentiel électrique positif et d'un potentiel électrique négatif en alternance aux deux actionneurs piézoélectriques (404, 408), moyennant quoi les volumes de la chambre d'air supérieure (206), de la chambre d'air intermédiaire (208) et de la chambre d'air inférieure (210) sont modifiés en alternance, ce qui a pour résultat un flux de fluide (220) entrant et sortant des ouvertures (112, 114, 116), le flux de fluide (220) étant utilisable pour refroidir un élément générateur de chaleur (102) d'un dispositif électronique.

9. Procédé selon la revendication 8, comprenant l'application du potentiel électrique positif et du potentiel électrique négatif en alternance aux deux actionneurs piézoélectriques (404, 408) pour respectivement augmenter et diminuer le volume de la chambre d'air centrale (208), tout en respectivement diminuer et augmenter le volume de la chambre d'air supérieure (206) et de la chambre d'air inférieure (210), moyennant quoi la chambre d'air centrale (208) présente le plus grand changement de volume par rapport à la chambre d'air supérieure (206) et à la chambre d'air inférieure (210).

10. Procédé selon la revendication 8 ou la revendication 9, comprenant l'ajustement de la fréquence d'alternance du potentiel électrique positif et du potentiel électrique négatif appliqués aux actionneurs piézoélectriques (404, 408) pour contrôler le flux de fluide (220), et l'adaptation de la fréquence d'alternance à la fréquence de résonance des trois chambres à air (206, 208, 210), en particulier à la fréquence de résonance de la chambre à air centrale (208).

11. Procédé selon la revendication 10, comprenant l'ajustement de la fréquence d'alternance du potentiel électrique positif et du potentiel électrique négatif de telle sorte qu'un écoulement maximum du courant de fluide (220) soit obtenu lorsque la fréquence d'alternance est sensiblement égale à la fréquence de résonance des trois chambres à air (206, 208, 210), en particulier à la fréquence de résonance de la chambre à air centrale (208).
